# EUROPEAN PATENT APPLICATION

(11) **EP 4 583 553 A1**
(43) Date of publication of application: **09.07.2025**
(21) Application number: 24150360.6
(22) Date of filing: 04.01.2024
(51) Int. Cl.: H04W 8/18

(54) **PROFILE PROVISIONING IN EUICC**

(71) Applicant: Giesecke+Devrient Mobile Security Germany GmbH, 81677 München (DE)
(72) Inventor: Schnellinger, Michael, 84032 Landshut (DE)
(74) Representative: Giesecke+Devrient IP

(57) **Abstract**

An eUICC comprising - a provisioning profile (P1) installed in the eUICC (10), and constructed for provisioning of profiles installed or scheduled to be installed in the eUICC (10); - at least one profile, referred to as target profile (P2), installed in the eUICC (10) including a profile identifier (ID), and present in a disabled status; **characterized in that**
- the provisioning profile (P1) comprises a profile enabler (PE) constructed to perform steps: -- E1) receive from the target profile (P2) the profile identifier (ID); -- E2) receive from an enablement orchestration server (20) an expected profile identifier (IDe) of a profile installed in the eUICC; -- E3) enable the target profile (P2) only under the condition that the profile identifier (ID) retrieved from the target profile (P2) and the expected profile identifier (IDe) retrieved from the enablement orchestration server (20) match with each other; - and optionally, when enabling the target profile (P2), disable the provisioning profile (P1).

## Description

### Field of the invention

The present invention relates to profile provisioning in an eUICC.

### Background of the invention and prior art

For eUICCs, several form factors are known, including pUICC or SIM card, embedded UICC eUICC in a narrower sense, and integrated UICC iUICC.

An eUICC is operated in a mobile device, i.e. a device having capability to communicate in a mobile network (wireless network, radio network), and hosts one or several profiles providing to the mobile device connectivity in the mobile network. In an eUICC having Remote SIM Provisioning, RSP, capability, profiles can provisioned remotely, including profile download from a profile server via the mobile device to the eUICC, installation of profiles in the eUICC, deletion of profiles from the eUICC and enabling and disabling of profiles in the eUlCC.

An applet is an application installed in an eUICC.

Document [1] [SGP.22] GSMA SGP.22 RSP Technical Specification Version 3.0, 19th October 2022, describes architectures and procedures for provisioning (managing) profiles of an eUICC. The profile server from which profiles are downloaded to eUICCs in an SGP.22 scenario is also referred to as SM-DP+. After download and installation of a profile from an SM-DP+ to an eUICC, the eUICC, via the device, sends a profile installation result notification to the SM-DP+, which includes inter alia an ICCID of the installed profile.

Document [1] [SGP.22] distinguishes between provisioning profiles and operational profiles. A provisioning profile, as defined in [1], is "[a] combination of Operator data and applications to be provisioned on an eUICC for the purposes of providing connectivity to a mobile network solely for the purpose of the provisioning of Profiles on the eUlCC." An operational profile, as defined in [1], is "[a] combination of Operator data and applications to be provisioned on an eUICC for the purposes of providing services by the Operator."

According to [1] [SGP.22], section 2.5 "Profile Protection and Delivery", an Operator's Profile is protected within a Profile Package prior to being downloaded to the eUlCC. As further set out in sub-section 2.5.1, "Profile Package Types Overview", from generation to download, a Profile Package will take the following different formats:
- Unprotected Profile Package (UPP): Raw eUICC Profile Package TLV sequence.
- Protected Profile Package (PPP): Segmented and protected in BSP payload TLVs.
- Bound Profile Package (BPP): Prepended with session key agreement info, key replacement package, ISD-P creation and configuration info.
- Segmented Bound Profile Package (SBPP): BPP segmented into STORE DATA APDU script for loading into eUICC. This step is performed by the LPD when the LPD is in the Device.

Document [1] [SGP.22] allows the Protected Profile Package to be encrypted either with a key which is unspecific for any eUICC, or with a key which is specific to an eUICC. The process for transforming the Protected Profile Package PPP into a Bound Profile Package BBP is also referred to as binding. The purpose of the operation of transforming the Protected Profile Package PPP to the Bound Profile Package BPP is to link a Protected Profile Package to a particular eUICC.

According to [1] [SGP.22], section 2.5.4 "Bound Profile Package", the Bound Profile Package (BPP) is generated by the SM-DP+, within the Profile Package Binding function. This is done within a key agreement between the eUICC and the SM-DP+, which is described in the download and installation procedure (section 3.1.3).

According to [1] [SGP.22], section 2.6.4.1 "Key agreement", an Elliptic Curve Key Agreement Algorithm (ECKA) is used for the establishment of a shared secret value. It shall follow the definition for the Anonymous Diffie-Hellman Key Agreement in BSI TR-03111. The algorithm is executed
- by the SM-DP+ using an eUICC one-time public key, otPK.EUICC.KA, and an SM-DP+ one-time private key (sometimes also named "secret" for "private"), otSK.DP.KA, and
- by the eUICC using an SM-DP+ one-time public key, otPK.DP.KA, and an eUICC one-time private key, otSK.EUICC.KA
to calculate the shared secret value.

From the shared secret value, the session keys S-ENC and S-MAC are derived, which in turn are used to encrypt and authenticate the Profile Protection Keys, PPK-ENC and PPK-MAC. With the Profile Protection Key PPK-ENC, the payload of the Protected Profile Package is encrypted (unless, according to a specific option, it is directly encrypted with S-ENC).

After an SM-DP+ has established a Bound Profile Package BBP and downloaded the BBP to an eUICC, the eUICC runs the above described key agreement to derive the shared secret value and finally the Profile Protection Key PPK-ENC (or in the specific option S-ENC), and decrypts the encrypted payload of the Protected Profile Package.

The documents [2] [SGP.41] GSMA SGP.41 eSIM IFPP Architecture and Requirements Version 1.0 Draft 17 and [3] [SGP.42] GSMA SGP.42 eSIM IFPP Technical Specification (unpublished at the date of filing the application) cover In-factory personalization or provisioning, which is a setup in which profiles are provisioned from an OEM production machine to an eUICC locally in a factory environment, contrary to the standard remote provisioning procedures envisaged in [1] [SGP.22], where a profile is downloaded to an eUICC from a remote profile provisioning server. The profile server on which the profiles are kept stored for download to eUICCs in an in-factory procedure is referred to either as also SM-DP+ or as SM-DPf. In the IFPP setup, profiles are first sent from the profile server SM-DP+ or SM-DPf to the OEM production machine. Later, the profiles are downloaded from the OEM production machine to an eUlCC.

In IFPP, typically a batch of several profiles, typically a thousand or several thousand profiles, is provided from the profile server SM-DP+ or SM-DPf to the production machine at a time, which are all encrypted with the same key, instead of with profile-individual keys.

For providing the batch of profiles, each profile package for providing a profile is embodied as a Batch Bound Profile Package. Herein, the Batch Bound Profile Package is encrypted with a batch profile protection key which is derived from a batch eUICC PKI key pair which is identical for all eUICCs of the batch, particularly derived according to a [1] [SGP.22] key agreement mechanism for generating a Bound Profile Package, with the batch eUICC one-time key pair used as the eUICC one-time key of [1] [SGP.22].

Since all Batch Bound profile packages BBPPs of the batch are encrypted with the same encryption key, a binding of a BBPP to a distinct eUICC is not yet achieved, and a BBPP can be downloaded to any eUICC.

The encryption of all BBPPs with the same key bears a risk that a BBPP is downloaded to the wrong eUICC, or to more than one eUICC, which is in contradiction to the destination of one profile to only one single eUICC.

In general, a challenge-response procedure comprises sending a challenge, comprising a random number RAND, from a challenger to a responder, signing at least the RAND with a signature key to create a response, sending back the signed RAND in the response to the challenger, and verifying the response with a verification key corresponding to the signature key.

Document [4] EP2533485B1 from the prior art discloses a method for providing subscription data of a profile from a data providing unit to a subscriber identity module, SIM, hosted in a mobile device, wherein the subscriber data are sent to the SIM in a challenge message of a challenge-response procedure. The provisioning of profile data or other data from a server to an eUICC in messages of a challenge-response procedure is also referred to a Ultra-Light-Bootstrap, ULB, provisioning procedure.

Document [5] EP2975871B1 from the prior art describes a subscriber identification module, SIM, storing a provisioning profile used to download a profile associated with operating a communication service, herein, as required, attempting the profile download through different mobile networks.

Document [6] US9467187B2 from the prior art discloses an eUICC within a terminal comprising at least one provisioning profile comprising information for establishing a connection with a subscription manager that supports a network operator. Upon the terminal receiving network operation information from a network operator supported by the subscription manager, an operational profile of the network operator is downloaded.

### Objective of the invention

It is an object of the present invention to provide an eUICC and method for profile provisioning to an eUICC which contribute to reliable installation and/or enablement of profiles to eUICCs, especially in in-factory profile management, and which may preferably contribute to preventing the cloning of profiles.

### Summary of the invention

The object of the invention is achieved by an eUICC with following features, according to claim 1. Embodiments of the invention are presented in dependent claims.

In greater detail, the object of the invention is achieved by an eUICC comprising:
- a provisioning profile installed in the eUICC, and constructed for provisioning of profiles installed or scheduled to be installed in the eUICC;
- at least one profile, referred to as target profile, installed in the eUICC including a profile identifier, and present in a disabled status.

The eUICC is characterized in that
- the provisioning profile comprises a profile enabler constructed to perform steps:
   -- E1) receive from the target profile the profile identifier;
   -- E2) receive from an enablement orchestration server an expected profile identifier of a profile installed in the eUICC;
   -- E3) enable the target profile only under the condition that the profile identifier retrieved from the target profile and the expected profile identifier retrieved from the enablement orchestration server match with each other, for example are identical.

The profile enable of the present invention, by retrieving from the enablement orchestration server a confirmation indicating that the target profile is an allowable profile of the eUICC and may be enabled, ensures reliable profile enablement.

Step E1) requires communication between the provisioning profile and the target profile. This communication may be effected over of an Application Programming Interface, API, implemented in the eUICC, or implemented outside the eUICC such as in the device and usable in the eUICC.

In case only one enabled profile at a time is allowable, upon enabling the target profile, disabling the provisioning profile is preferably performed.

The profile enabler of the present invention may be embodied as an Applet. An Applet is understood as an (software) application in an embedded device like an eUlCC. Particularly, the Applet may be embodied as an ULB-Applet, constructed to receive said expected profile identifier from said enablement orchestration server in a message field of an ULB provisioning procedure, for example in an ULB provisioning procedure similar to the one described in [4] EP2533485B1.

In case of the profile enabler being an ULB-Applet, the message field may be a challenge field, particularly an AUTHENTICATE2 (M4) data field, of a challenge-response procedure.

According to some embodiments, the target profile further comprises or can comprise an IFPP tag which, when present in the target profile, is indicative of the target profile being eligible to IFPP provisioning, wherein the profile enabler enables the target profile only under the condition that the IFPP tag is present in the target profile. Accordingly, the profile enabling of such an IFPP tagged target profile is preferably performed in an IFPP provisioning environment.

According to some embodiments, the profiles or/and at least one profile, with the exception of the provisioning profile, or/and the target profile is embodied as an operational profile. Herein, preferably, the provisioning profile is not an operational profile, and the target profile to be enabled by the profile enabler is an operational profile.

According to some embodiments, the profile identifier is embodied as or comprises one or several of the following, preferably at least ICCID: ICCID; IMSI.

The invention further provides a method for installing at least one target profile to at least one eUlCC. The eUICC comprises a provisioning profile installed in the eUlCC. Said provisioning profile is constructed for provisioning of profiles installed or scheduled to be installed in the eUlCC.

The method comprises steps:
2) at a profile storage connected to or integrated into an OEM production machine, located preferably in an IFPP environment, provide at least one Batch Bound Profile Package, BBPP, preferably a batch of several Batch Bound Profile Packages, BBPPs, said BBPP comprising said target profile to be installed to the eUICC;
4) by the OEM production machine, for at least one eUICC, preferably to a batch of eUICCs corresponding to said batch of profiles, download the BBPP comprising the target profile from the profile storage to the eUICC and establish an installed and disabled status of the target profile in the eUICC;
5) by the OEM production machine, receive, from the eUICC, or from each eUICC of the batch, a profile installation result notification of the target profile, said profile installation result notification comprising a profile identifier of the target profile and at least one hardware identifier, said at least one hardware identifier comprising a hardware identifier of the eUICC or/and a hardware identifier of a device hosting the eUICC;
Steps 6), 7), 8) by the OEM production machine, have the effect to send the profile installation result notification, received from the eUICC, or batch of eUlCCs, to an enablement database provided in or accessible for an enablement orchestration server; the enablement orchestration server is constructed to interact with the provisioning profile of the eUICC for later profile enablement.

The method for installing at least one target profile characterized in that
- the provisioning profile in the eUICC comprises a profile enabler;
- the disabled status of the target profile is such that the target profile can be enabled by the profile enabler;
- the profile identifier and at least one hardware identifier comprised in the profile installation result notification are stored in the enablement database, the profile identifier being stored as an expected profile identifier associated to said at least one hardware identifier.

The method may further comprise one or several or all of the steps:
1) By or on behalf of the OEM production machine or profile storage, request from a profile server, preferably an SM-DP+ or SM-DPf, delivery of said at least one Batch Bound Profile Package, BBPP, preferably a batch of several Batch Bound Profile Packages, BBPPs;
In 2) deliver the ordered Batch Bound Profile Package, BBPP, preferably batch of several Batch Bound Profile Packages, BBPPs, from the profile server to the profile storage.

The method may further comprise steps:
3) at the OEM production machine, receive from the profile storage a loading script comprising the or having attached thereto the BBPP;
In 4), the OEM production machine, for effecting the download of the BBPP with the target profile to the eUICC, execute the received loading script of the target profile.

According to some embodiments, in 4) the disabled status of the target profile is such that the target profile can be enabled exclusively by the profile enabler. Exclusive enabling of profiles only by the profile enabler ensures that the verification of the profile identifier against the expected profile identifier cannot, or at least cannot easily, be abusively omitted or skipped.

In some embodiments, the exclusive ability of the profile enabler to enable profiles may be combined with an IFPP tagging of profiles, such that IFPP tagged target profiles can be enabled exclusively by the profile enabler in the provisioning profile, by the above described method.

The invention further provides a method for enabling a target profile installed in an eUICC and present in a disabled status of said target profile.

Said method comprises steps:
Provide an eUICC comprising:
- a provisioning profile installed in the eUICC, and constructed for provisioning of profiles installed or scheduled to be installed in the eUICC;
- at least one profile, referred to as target profile, installed in the eUICC including a profile identifier, and present in a disabled status.

The method for enabling a target profile installed in an eUICC is characterized in that
- the provisioning profile comprises a profile enabler, and by the steps performed by the profile enabler:
   -- E1) receive from the target profile the profile identifier;
   -- E2) receive from an enablement orchestration server an expected profile identifier of a profile registered as installed in the eUICC;
   -- E3) enable the target profile only under the condition that the profile identifier retrieved from the target profile and the expected profile identifier retrieved from the enablement orchestration server match with each other, for example are identical.

In case only one enabled profile at a time is allowable, when enabling the target profile, the provisioning profile is disabled.

According to some embodiments,
- the expected profile identifier is received in step E2) at the profile enabler in reaction to a request, E0), for expected profile identifier, which is sent from the profile enabler to the enablement orchestration server, and which is received at the enablement orchestration server, and which request comprises at least one hardware identifier; said at least one hardware identifier may comprise a hardware identifier of the eUICC hosting the target profile, or/and a hardware identifier of a device hosting the eUICC;
- the enablement orchestration server selects the expected profile identifier taking into account the at least one hardware identifier received from the profile enabler.

According to some embodiments,
- the enablement orchestration server performs, as a step E4), an anti-cloning check comprising a verification if the profile identifier corresponding to the hardware identifier received from the profile enabler is the same profile identifier as a further profile identifier hich corresponds to a different hardware identifier which was received at the enablement orchestration server;
- the enablement orchestration server sends, and the profile enabler receives, the expected profile identifier only under the condition that the enablement orchestration server hasn't received a request corresponding to the same profile identifier for a different hardware identifier.

According to some embodiments,
- the enablement orchestration server performs, as a step E4), an anti-cloning check comprising a verification if a \profile identifier received from the profile enabler is the same as a further profile identifier which was received at the enablement orchestration server from a profile enabler of a different eUICC;
- the enablement orchestration server sends, and the profile enabler receives, the expected profile identifier only under the condition that the enablement orchestration server hasn't received a request with the same profile identifier from a different eUICC.

According to some embodiments, the profile enabler is embodied as an Applet, particularly an ULB-Applet, wherein said expected profile identifier is received at the eUICC from said enablement orchestration server in a message field of an ULB provisioning procedure, particularly in a challenge field, particularly an AUTHENTICATE2 data field (M4), of a challenge-response procedure.

The invention further provides a computer readable medium containing code when executed performing a method for installing a profile or a method for enabling profile.

### Brief description of the drawings

Embodiments of the invention will now be described with reference to the accompanying drawings, throughout which like parts are referred to by like references, and in which represents:
Fig. 1 an architecture and method for installing at least one target profile P2, or a batch of such profiles, to an eUICC, according to an embodiment of the invention;
Fig. 2 a chart depicting enablement of a target profile P2 installed in an eUICC;
Fig. 3 a chart depicting enabling of a target profile P2 installed in an eUICC and pending in a disabled status with using a profile enabler installed in a provisioning profile of the same eUICC, according to an embodiment of the invention.

### Detailed description of the invention

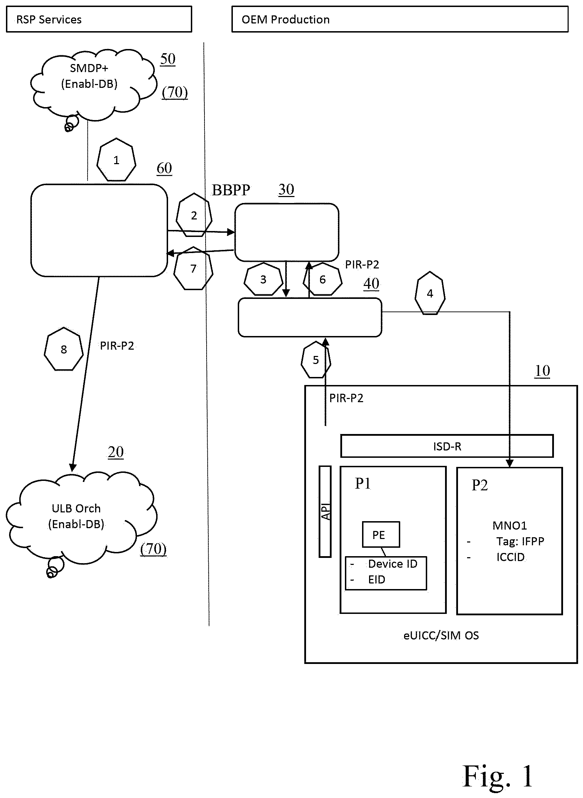

Fig. 1 describes architecture and method for installing a target profile P2 to an eUICC 10, according to an embodiment of the invention. The eUICC 10 comprises a provisioning profile P1 installed in the eUICC 10. Said provisioning profile P1 is constructed for provisioning of profiles installed or scheduled to be installed in the eUICC 10, however is not an operational profile allowing general communication in a mobile network.

The architecture comprises the eUICC 10, an enablement orchestration server 20, a profile storage 30, an OEM production machine 40, and a profile server 50, and optionally an loT Warehouse 60.

The profile storage 30 and the OEM production machine 40 are located preferably in an In-Factory-Profile-Provisioning, IFPP, environment at an OEM production site.

The profile server 50, the enablement orchestration server 20 and the loT Warehouse 60 are located outside the OEM production site, and outside the In-Factory-Profile-Provisioning, IFPP, environment, and are operated by a Provider of Remote SIM Provisioning, RSP, services. The basic underlying architecture and procedures of the RSP services may be according to the applicable and suitable GSMA specifications [1] SGP.22, [2] SGP.41,

[3] SGP.42, as far as not completed or/and amended by procedures and elements specific to the present invention.

The profile storage 30 may be enabled as a Secure PC (Personal Computer) (or similar device) with a Hardware Security Module, HSM, as the profile storage core, and computing modules enabling access to and from the profile storage core/HSM. The profile storage 30 is connected to or integrated into the OEM production machine 40.

The profile server 50 may be embodied as an SM-DP+, for example according to [1] SGP.22, and is preferably located outside the IFPP environment.

The loT Warehouse 60 comprised in the architecture of the embodiment of Fig. 1 is connected or connectable between the profile server 50, the profile storage 30, and the enablement orchestration server 20. Herein, the loT Warehouse 60 manages the secure exchange of profiles, particularly Bound Profile Packages, BPPs, and Batch Bound Profile Packages, BBPPs, profile identifiers IDs, hardware identifiers, EID and device ID, and further profile related information, such as profile installation result messages, between the profile server 50, the profile storage 30 and the enablement orchestration server 20. Particularly, the loT Warehouse 60 manages communication of information and data across a border between the OEM production environment with the IFPP production environment on the one hand, and the entities of the RSP services provider on the other hand. For securing communication over said border, the loT warehouse 60 provides of Batch OT keys for encrypting Batch Bound Profile Packages, BBPPs, for sending them securely to the secure profile storage 30 in the OEM IFPP production environment.

The method comprises the following steps:
1) The OEM needs profiles for at least one particular MNO. Accordingly, the loT Warehouse 60 request from the profile server 50 a Batch of MNO-Profiles of the required MNO. The Batch may comprise for example 1.000 MNO-Profiles, each MNO-Profile specified by a combination of profile identifiers, IDs, IMSI and ICCID. Each profile in the Batch of MNO-Profiles is a target profile P2 in the sense of the present invention.
2) The profile server 50 prepares the requested Batch Bound Profile Packages, BBPPs, and sends the Batch Bound Profile Packages, BBPPs, to the profile storage 30, and the profile storage 30 receives and stores the Batch Bound Profile Packages, BBPPs;
3) One or several devices are produced at the OEM production site, wherein at least one eUICC is incorporated into each produced device. Each produced device is specified by a device identifier, called Device ID. Any of the Batch Bound Profile Package, BBPPs, can still be loaded to any preconfigured eUICC on any produced device. For every produced device, the OEM-Production Machine 40 gets from the profile storage 30 a Loading-Script which when executed effects download of a profile to an eUICC hosted in the device.
4) The OEM production machine 40 executes the Loading-Script for a device with a Batch Bound Profile Package, BBPP, of the target profile P2, and hereby downloads the Batch Bound Profile Package, BBPP, comprising the target profile P2, from the profile storage 30 to the eUICC hosted in the device. The downloaded target profile P2 is installed in the eUICC and set or kept in an disabled state. Similarly, the OEM production machine 40 executes Loading-Scripts for further produced devices and with further Batch Bound Profile Package, BBPPs, to download uppermost all of the, for example 1.000, pre-stored BBPPs (profiles) to eUICCs hosted in produced devices.
5) The OEM production machine 40 receives from each eUICC to which a profile was downloaded and installed as described above, a profile installation result notification PIR, herein also one PIR for the target profile P2, which is profile installation result notification PIR-P2. Each profile installation result notification PIR includes a profile identifier ID of the profile downloaded and installed to the respective eUICC, and at least one hardware identifier; as a hardware identifier, a hardware identifier EID of the eUICC, or a hardware identifier of the device hosting the eUICC, device identifier, device ID, may be provided, or both an EID and a device ID.
6) The OEM production machine 40 collects the profile installation result notifications PIR received from the eUICCs and sends them to the profile storage 30.
7) The profile installation result notifications PIRs are shared with the IOT Warehouse 60 for billing and controlling purpose, which is out of scope of this invention.
8) The IOT Warehouse 60 further forwards the profile installation result notifications PIR received from the eUICCs to an enablement data base DB 70, which may be in the enablement orchestration server 20 or/and in the profile server 50. The profile identifiers ID and hardware identifiers EID/device ID are stored to the enablement database 70. In case both hardware identifiers of eUICC and device are provided, the enablement database 70 may have a mapping table for Hardware specific eUICC identifiers EID to device identifiers, device ID, also referred to as "ULB DevicelD".

According to the present invention, each of the eUICCs comprises a provisioning profile P1 comprising installed therein a profile enabler PE. The disabled state of the downloaded and installed profiles is such that the respective profile can be enabled by the profile enabler. Further, the profile identifiers ID and the hardware identifier EID or/and device ID received in the profile installation result notifications PIR are stored, at the enablement data base DB 70. Herein, the profile identifiers ID are stored as expected profile identifiers IDe associated to the hardware identifier EID or/and device ID, for purpose of later profile enablement by the profile enabler PE.

The chain of steps 6), 7), 8) particularly achieves that the profile installation result notifications PIR are transmitted from the eUICCs to the enablement data base DB 70, so that the enablement orchestration server 20 can later access the data in the enablement data base DB 70 for profile enabling.

The hardware identifier EID of the eUICC, and/or the device identifier, device ID, of the respective device hosting the eUICC comprised in the profile result notification, may be used for an anti-cloning check. For the anti-cloning check, the EID or/and device ID is received upon receiving a profile enablement request for a profile specified by a profile identifier ID. In case a profile enablement request for the same profile with the same profile identifier ID and a different EID or/and device ID has been received, then one of the eUICCs/devices holds the original profile, and the other eUICC/device holds a clone of the original profile.

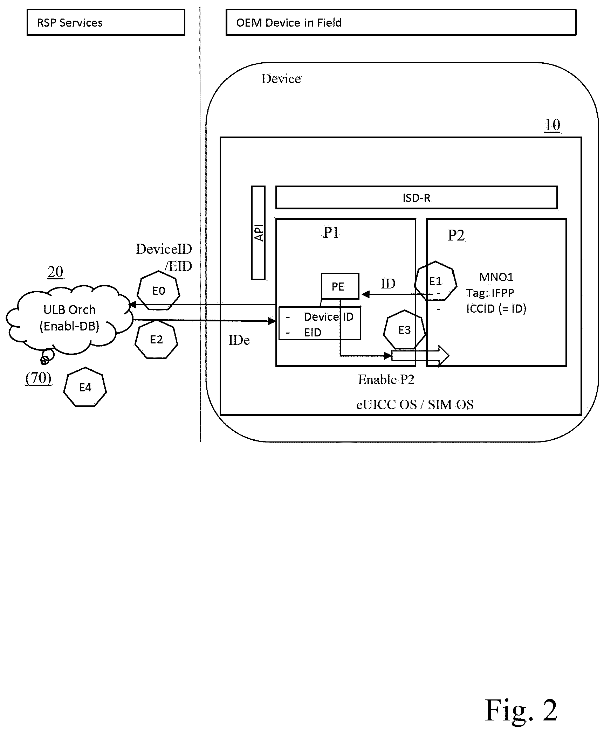

Fig. 2 shows a chart depicting enablement of a target profile P2 which was installed to an eUICC in a procedure according to Fig. 1, or a similar procedure according to the present invention.

Fig. 2 shows, as hardware entities involved in the enablement procedure, an enablement orchestration server 20 operated by an RSP services provider, and an eUICC 10 hosted in a device in the field, for example with an end user.

Said target profile P2 is installed in the eUICC 10 and present in a disabled status of said target profile P2.

The eUICC 10 further comprises a provisioning profile P1 installed in the eUICC 10. The provisioning profile P1 is constructed for provisioning of profiles installed or scheduled to be installed in the eUICC 10, and is preferably not an operational profile itself. According to the present invention, the provisioning profile P1 comprises a profile enabler PE.

At an enablement database 70, which is provided in or accessible for the enablement orchestration server 20, at least a profile identifier of a profile installed to an eUICC is stored as expected profile identifier IDe, along with a hardware identifier EID of the eUICC 10 to which the profile is installed, or/and a hardware identifier, device ID, of a device hosting said eUICC 10.

The device with the eUICC 10 is set powered on for the first time, and the provisioning profile P1 runs up, herein starting the profile enabler PE.

The profile enabler PE sends a request for an expected profile identifier IDe to the enablement orchestration server 20, along with a hardware identifier of a device, device ID, hosting the eUICC 10, or/and a hardware identifier of the eUICC 10, EID, corresponding to a step E0).

The profile enabler PE retrieves and receives from the target profile P2 the profile identifier ID of the target profile P2, corresponding to a step E1).

The enablement orchestration server 20 sends back to the eUICC 10 up to profile enabler PE an expected profile identifier IDe of a profile installed to an eUICC, corresponding to a step E2).

The profile enabler PE enables the target profile P2 only under the condition that the profile identifier ID retrieved from the target profile P2 and the expected profile identifier IDe retrieved from the enablement orchestration server 20 match with each other, corresponding to a step E3).

Particularly in case of an eUICC 10 allowing only one enabled profile at a time, such as a current [1] SGP.22 compliant eUICC, upon enabling the target profile P2, the provisioning profile P1 is disabled.

In case of an eUICC allowing multi-enabled profiles, the provisioning profile P1 may be disabled upon enabling the target profile P2, since it is no longer required with the operational target profile P2 being enabled. Alternatively, the provisioning profile P1 may remain enabled in spite of enabling the operational target profile P2.

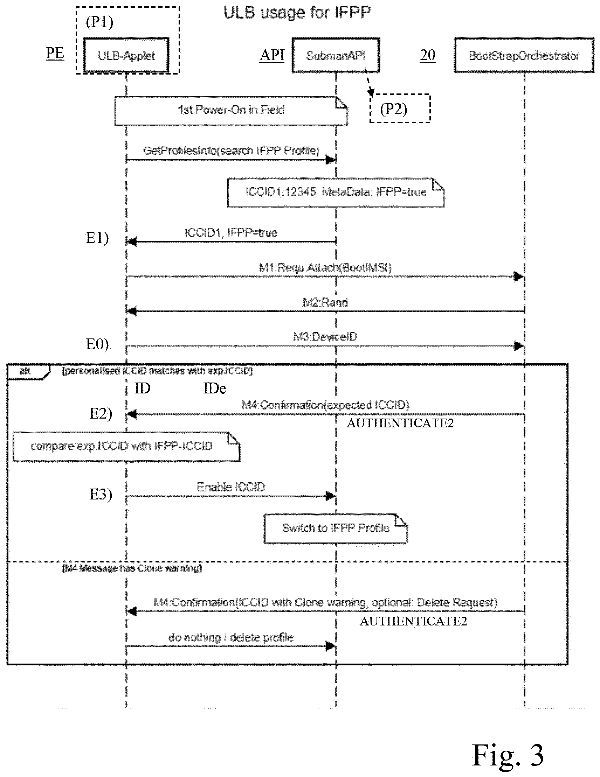

In addition, before step E2), the enablement orchestration server 20 may perform an anti-cloning check, according to a step E4), which is described in greater detail with reference to Fig. 3.

Fig. 3 shows a chart depicting a procedure of enabling an IFPP tagged target profile P2 installed in an eUICC 10 and pending in a disabled status, according to an embodiment of the invention. The enabling is done with using a profile enabler PE according to the present invention, which is in the embodiment of Fig. 3 embodied as an ULB-Applet. The eUICC 10 comprises a provisioning profile P1 installed in the eUICC 10 and present in an enabled status. The profile enabler PE (ULB-Applet) is installed within the enabled provisioning profile P1. The provisioning profile P1 is installed in the same eUICC as the target profile P2. The eUICC 10 comprises, as an embodiment of an Application Programming Interface API, a SubMan API enabling interfacing, over the SubMan API, between different profiles within the eUICC, particularly enabling interfacing between the provisioning profile P1 and the target profile P2 over the SubMan API. The target profile P2 is tagged with an IFPP tag indicating that the target profile P2 is eligible to IFPP profile enabling. The IFPP eligibility may for example be tagged by an entry "IFPP=true" in the target profile's profile MetaData.

The eUICC 10 is operated in a mobile device, as an embodiment of a device. The form factor of the eUICC may be pUICC, eUICC in a stricter sense or iUICC. In case of an eUICC in a stricter sense or iUICC, the eUICC is particularly installed in the mobile device.

In the profile enabling, an enablement orchestration server 20, in the embodiment of Fig. 3 embodied as an ULB Orchestrator or Bootstrap Orchestrator, is involved.

The procedure according to Fig. 3 of enabling the target profile P2 starts with a first power-on of the eUICC 10 in the mobile device, which is effected for example by power-on of the mobile device. In reaction to the power-on of the eUICC 10, the enabled provisioning profile P1 starts to operate, and the profile enabler PE (ULB-Applet) is set into operation.

The profile enabler PE sends to the SubMan API, with the aim to search for IFPP eligible disabled profiles, a command GetProfileslnfo(), and receives from the SubManAPI a list of all IFPP eligible profiles present in the eUICC 10 in a disabled state, containing the target profile P2. Hereby, according to step E1), the profile identifier ID (here ICCID) of the target profile P2 is received at the profile enabler.

The list of IFPP eligible profiles contains, for each profile, at least one profile identifier, for example ICCID, and an IFPP eligibility indicator, for example "IFPP=true", retrieved from the profile's profile MetaData.

Next, the profile enabler PE makes the provisioning profile P1 send an Attach Request, in a message M1, with a Boot IMSI to the enablement orchestration server 20 (ULB- or Bootstra p-Orchestrator).

The enablement orchestration server 20 sends back to the eUICC 10, to the provisioning profile P1, a challenge, in a message M2, including an random number RAND.

The profile enabler PE replies to the enablement orchestration server 20 with a message M3 which includes a device identifier, device ID, which is a hardware identifier of the mobile device hosting the eUICC 10.

The enablement orchestration server 20 interprets the Message M3 with the device identifier, device ID, (hardware identifier of the mobile device) as a request for sending an expected profile identifier IDe to the eUICC, corresponding to a step E0).

Upon receiving the message M3, the enablement orchestration server 20 retrieves, based on the device identifier, device ID, received from the eUICC 10 / profile enabler PE, an (or at least one) expected profiler identifier, IDe, which is in Fig. 3 an expected ICCID, of a profile scheduled for the mobile device hosting the eUICC 10.

The enablement orchestration server 20 sends the expected profile identifier, IDe, in Fig. 3 expected ICCID, to the eUICC 10, to the profile enabler PE, corresponding to a step E2).

The profile enabler PE compares the profile identifier ID / ICCID which was eUICC internally retrieved from the SubMan API with the expected profile identifier IDe / ICCID which was received from external from the enablement orchestration server 20.

Only in the case when the profile identifier ID / ICCID eUICC internally retrieved and the expected profile identifier IDe / ICCID received from the enablement orchestration server 20 match or are equal, the profile enabler PE enables the target profile P2, corresponding to a step E3).

In addition, before step E2), the enablement orchestration server 20 may perform an anti-cloning check, according to a step E4).

In case the enablement orchestration server 20 hasn't received a request from a different device or/and different eUICC, which made the enablement orchestration server 20 retrieve the same expected ICCID, the anti-clone check is passed successfully. In case the enablement orchestration server 20 has previously received a request from a different device or/and eUICC, which made the enablement orchestration server 20 retrieve the same expected ICCID, the anti-cloning check is failed.

In a case of a successfully passed anti-cloning check, the steps E2) and E3) are performed as described above.

In a case of a failed anti-cloning check, the enablement orchestration server 20 sends to the eUICC 10, to the profile enabler PE, the message M4 including as a payload also an expected profile identifier IDe, here expected ICCID, and in addition a clone warning, and optionally a delete request, requesting the profile enabler PE to delete the target profile P2. The profile enabler (ULB -Applet) PE, in the case of receiving a clone warning together with the expected ICCID, IDe, does not enable the target profile P2, and in case of having received a delete request, in addition deletes the target profile P2.

### Reference numerals

- 10: eUICC
- 20: enablement orchestration server, particularly ULB orchestration server
- 30: profile storage, particularly with included HSM
- 40: OEM production machine
- 50: profile server, particularly DM-DP+ or SM-DPf
- 60: loT Warehouse
- 70: enablement database, is provided in or accessible for the enablement orchestration server 20
- P1: provisioning profile
- P2: target profile

### Cited documents

[1] [SGP.22] GSMA SGP.22 RSP Technical Specification Version 3.0, 19th October 2022
[2] [SGP.41] GSMA SGP.41 eSIM IFPP Architecture and Requirements Version 1.0 Draft 17
[3] [SGP.42] GSMA SGP.42 eSIM IFPP Technical Specification (to be finalized and unpublished at the date of filing the application)
[4]EP2533485B1
[5]EP2975871B1

## Claims

1. An eUICC (10) comprising:
- a provisioning profile (P1) installed in the eUICC (10), and constructed for provisioning of profiles installed or scheduled to be installed in the eUICC (10);
- at least one profile, referred to as target profile (P2), installed in the eUICC (10) including a profile identifier (ID), and present in a disabled status;
**characterized in that**
- the provisioning profile (P1) comprises a profile enabler (PE) constructed to perform steps:
-- E1) receive from the target profile (P2) the profile identifier (ID);
-- E2) receive from an enablement orchestration server (20) an expected profile identifier (IDe) of a profile installed in the eUICC;
-- E3) enable the target profile (P2) only under the condition that the profile identifier (ID) retrieved from the target profile (P2) and the expected profile identifier (IDe) retrieved from the enablement orchestration server (20) match with each other;
- optionally, when enabling the target profile (P2), disable the provisioning profile (P1).

2. The eUICC (10) according to claim 1, wherein the profile enabler (PE) is embodied as an Applet, particularly as an ULB-Applet, constructed to receive said expected profile identifier (IDe) from said enablement orchestration server (20) in a message field of an ULB provisioning procedure.

3. The eUICC (10) according to claim 2, wherein the message field is a challenge field, particularly an AUTHENTICATE2 (M4) data field, of a challenge-response procedure.

4. The eUICC (10) according to any of claims 1 to 3, wherein the target profile (P2) further comprises, or can comprise, an IFPP tag which, when present in the target profile (P2), is indicative of the target profile (P2) being eligible to IFPP provisioning, and wherein the profile enabler (PE) enables the target profile (P2) only under the condition that the IFPP tag is present in the target profile (P2).

5. The eUICC (10) according to any of claims 1 to 4, wherein the target profile (P2) is embodied as a operational profile, or some or all profiles installed in the eUICC (10), optionally or mandatorily with the exception of the provisioning profile (P1), are embodied as operational profiles.

6. The eUICC (10) according to any of claims 1 to 5, wherein the profile identifier (ID) is embodied as or comprises one or several of the following, preferably at least ICCID:
- ICCID;
- IMSI.

7. A method for installing at least one target profile (P2) to at least one eUICC (10), the eUICC (10) comprising a provisioning profile (P1) installed in the eUICC (10), said provisioning profile (P1) constructed for provisioning of profiles installed or scheduled to be installed in the eUICC (10), the method comprising steps:
2) at a profile storage (30) connected to or integrated into an OEM production machine (40), located preferably in an IFPP environment, provide at least one Batch Bound Profile Package, BBPP, preferably a batch of several Batch Bound Profile Packages, BBPPs, said BBPP comprising said target profile (P2) to be installed to the eUICC (10);
4) by the OEM production machine (40), for at least one eUICC (10), preferably to a batch of eUICCs corresponding to said batch of profiles, download the BBPP comprising the target profile (P2) from the profile storage (30) to the eUICC (10) and establish an installed and disabled status of the target profile (P2) in the eUICC (10);
5) by the OEM production machine (40), receive, from the eUICC (10), or from each eUICC of the batch, a profile installation result notification (PIR-P2) of the target profile (P2), said profile installation result notification (PIR-P2) comprising a profile identifier (ID) of the target profile (P2) and at least one hardware identifier (EID; device ID), said at least one hardware identifier comprising a hardware identifier (EID) of the eUICC (10), or/and a hardware identifier (device ID) of a device hosting the eUICC (10);
6), 7), 8) by the OEM production machine (40), send the profile installation result notification (PIR-P2), received from the eUICC (10), or batch of eUlCCs, to an enablement database (70) provided in or accessible for an enablement orchestration server (20) which is constructed to interact with the provisioning profile (P1) of the eUICC (10) for later profile enablement;
**characterized in that**
- the provisioning profile (P1) in the eUICC (10) comprises a profile enabler (PE);
- the disabled status of the target profile (P2) is such that the target profile (P2) can be enabled by the profile enabler (PE);
- the profile identifier (ID) and at least one hardware identifier (EID; device ID) comprised in the profile installation result notification (PIR-P2) are stored in the enablement database (70), the profile identifier (ID) being stored as an expected profile identifier (IDe) associated to said at least one hardware identifier (EID; device ID).

8. The method according to claim 7, further comprising on or several of the steps:
1) By or on behalf of the OEM production machine (40) or profile storage (30), request from a profile server (50), preferably an SM-DP+ or SM-DPf, delivery of said at least one Batch Bound Profile Package, BBPP, preferably batch of several Batch Bound Profile Packages, BBPPs;
In 2) deliver the ordered Batch Bound Profile Package, BBPP, preferably batch of several Batch Bound Profile Packages, BBPPs, from the profile server (50) to the profile storage (30).

9. The method according to claim 7 or 8, further comprising steps:
3) at the OEM production machine (40), receive from the profile storage (30) a loading script comprising the or having attached thereto the BBPP;
In 4), the OEM production machine (40), for effecting the download of the BBP with the target profile (P2) to the eUICC (10), execute the received loading script.

10. The method according to any of claims 7 to 9, wherein
In 4) the disabled status of the target profile (P2) is such that the target profile (P2) can be enabled exclusively by the profile enabler (PE).

11. A method for enabling a target profile (P2) installed in an eUICC (10) and present in a disabled status of said target profile (P2), said method comprising steps:
Provide an eUICC (10) comprising:
- a provisioning profile (P1) installed in the eUICC (10), and constructed for provisioning of profiles installed or scheduled to be installed in the eUICC (10);
- at least one profile, referred to as target profile (P2), installed in the eUICC including a profile identifier (ID), and present in a disabled status;
**characterized in that**
- the provisioning profile (P1) comprises a profile enabler (PE), and by the steps performed by the profile enabler (PE):
-- E1) receive from the target profile (P2) the profile identifier (ID);
-- E2) receive from an enablement orchestration server (20) an expected profile identifier (IDe) of a profile registered as installed in the eUICC;
-- E3) enable the target profile (P2) only under the condition that the profile identifier (ID) retrieved from the target profile (P2) and the expected profile identifier (IDe) retrieved from the enablement orchestration server (20) match with each other;
- optionally, when enabling the target profile (P2), disable the provisioning profile (P1).

12. The method according to claim 11, wherein:
- the expected profile identifier (IDe) is received in step E2) at the profile enabler (PE) in reaction to a request, E0), for expected profile identifier (IDe), which is sent from the profile enabler (PE) to the enablement orchestration server (20), and which is received at the enablement orchestration server (20), and which request comprises at least one hardware identifier (EID; device ID), said at least one hardware identifier comprising a hardware identifier (EID) of the eUICC (10) hosting the target profile (P2), or/and a hardware identifier (device ID) of a device hosting the eUICC (10);
- the enablement orchestration server (20) selects the expected profile identifier (IDe) taking into account the at least one hardware identifier (EID; device ID) received from the profile enabler (PE).

13. The method according to claim 12, wherein
- the enablement orchestration server (20) performs, as a step E4), an anti-cloning check comprising a verification if the profile identifier (ID) corresponding to the hardware identifier (EID; device ID) received from the profile enabler (PE) is the same profile identifier as a further profile identifier (ID) which corresponds to a different hardware identifier (EID; device ID) which was received at the enablement orchestration server (20);
- the enablement orchestration server (20) sends, and the profile enabler (PE) receives, the expected profile identifier (IDe) only under the condition that the enablement orchestration server (20) hasn't received a request corresponding to the same profile identifier (ID) for a different hardware identifier (EID; device ID).

14. The method according to any of claims 11 to 13, wherein the profile enabler (PE) is embodied as an ULB-Applet, and wherein said expected profile identifier (IDe) is received at the eUICC (10) from said enablement orchestration server (20) in a message field of an ULB provisioning procedure, particularly in a challenge field, particularly an AUTHENTICATE2 data field (M4), of a challenge-response procedure.

15. A computer readable medium containing code when executed performing a method according to any of claims 7 to 14, preferably with an eUICC (10) according to any of claims 1 to 6.
